(19) **Europäisches Patentamt European Patent Office Office européen des brevets**

(11) **EP 3 035 287 B1**

(12) **EUROPEAN PATENT SPECIFICATION**

(45) Date of publication and mention
of the grant of the patent:
**27.03.2019 Bulletin 2019/13**

(51) Int Cl.:
*G06T 7/11* *(2017.01)*    *G06T 7/00* *(2017.01)*

(21) Application number: **15199571.9**

(22) Date of filing: **11.12.2015**

(54) **IMAGE PROCESSING APPARATUS, AND IMAGE PROCESSING METHOD**

BILDVERARBEITUNGSVORRICHTUNG UND BILDVERARBEITUNGSVERFAHREN

APPAREIL ET PROCÉDÉ DE TRAITEMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2014 US 201414576329**

(43) Date of publication of application:
**22.06.2016 Bulletin 2016/25**

(73) Proprietor: **Toshiba Medical Systems Corporation Otawara-shi, Tochigi-ken 324-8550 (JP)**

(72) Inventors:
• **REYNOLDS, Steven**
  **Edinburgh, EH6 5NP (GB)**
• **MOHR, Brian**
  **Edinburgh, EH6 5NP (GB)**
• **RAZETO, Marco**
  **Edinburgh, EH6 5NP (GB)**

(74) Representative: **Moreland, David**
  **Marks & Clerk LLP**
  **Aurora**
  **120 Bothwell Street**
  **Glasgow G2 7JS (GB)**

(56) References cited:
**EP-A1- 2 120 208    US-A1- 2009 022 375**

**Description**

FIELD

Embodiments described herein relate generally to an image processing apparatus, an image processing method, and an image processing program.

BACKGROUND

Computed tomography (CT) is used in medical imaging for acquiring three-dimensional image data using X-rays. Three-dimensional CT image data acquired from a CT scan has a plurality of three-dimensionally arrayed voxels. Each voxel has a pixel value corresponding to an X-ray attenuation amount. The X-ray attenuation amount is expressed as a CT value defined by the Hounsfield unit (HU). Here, 0 HU is the CT value of water.

Applications for diagnosing a coronary artery disease using CT have been developed. Such an application is used to specify the range of an atherosclerotic heart disease present in a blood vessel.

A contrast medium is used to increase the pixel value of a blood vessel area depicted in a CT image. As a technique for diagnosing a coronary artery disease, a non-contrast cardiac CT scan using no contrast medium and a contrast cardiac CT scan using a contrast medium are used. The non-contrast cardiac CT scan is a CT scan targeting a heart in which the contrast is not enhanced with a contrast medium. The non-contrast cardiac CT scan sometimes includes a calcium scoring scan. The contrast cardiac CT scan is a CT scan targeting a heart in which the contrast is enhanced with a contrast medium. Images obtained by these two scans are aligned using, for example, automatic nonlinear alignment processing or automatic linear alignment processing. A subtraction image is generated from a subtraction between pixel values at corresponding points in an image obtained by a contrast scan and an image obtained by a non-contrast scan. The subtraction image is used to evaluate, e.g., the state of a blood vessel.

In a single non-contrast calcium scoring scan, a calcium deposition area and a stent area are depicted. In some cases, a blood vessel area is not discriminated from another soft tissue area. In an image acquired by a single contrast CT scan, the Hounsfield value of an image area (contrast-enhanced blood vessel area) regarding a blood vessel enhanced with a contrast medium sometimes overlaps the Hounsfield values of a calcium deposition area and stent area. When an image (contrast image) acquired by a contrast CT scan is displayed using a standard window level or a color mapping technique, it is difficult to visually discriminate a contrast-enhanced blood vessel area from a calcium deposition area or a stent area.

When a contrast-enhanced blood vessel area is depicted in distinction from a calcium deposition area and a stent area, the range of a coronary artery disease can be specified to measure a blood vessel stenosis (abnormal constriction or stenosis of a blood vessel). By obtaining a subtraction between a contrast image and a non-contrast image, features common to the contrast image and the non-contrast image, for example, a bone area and a soft tissue area can be removed to leave a pixel area enhanced with a contrast medium.

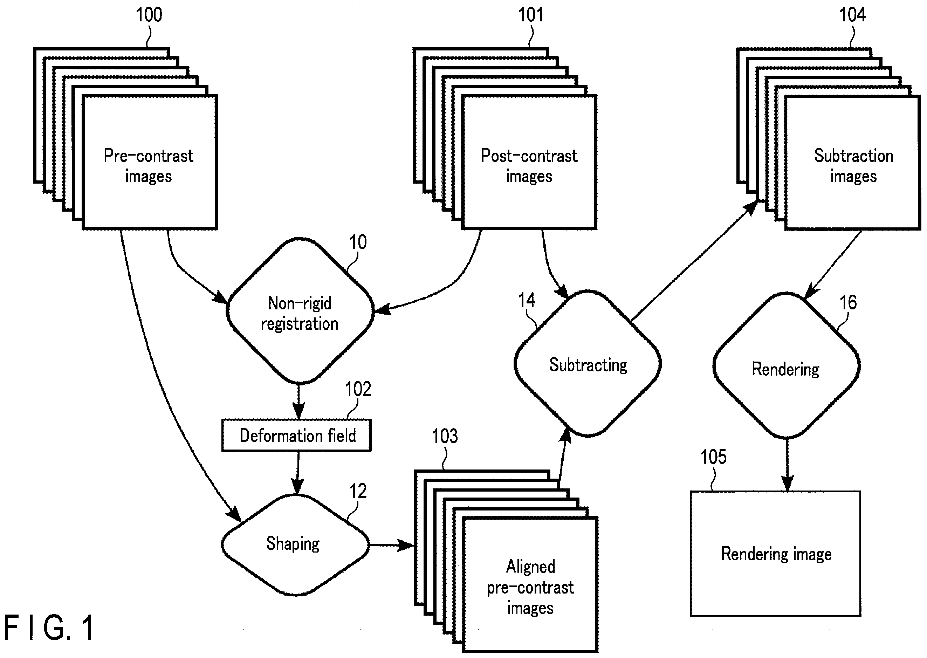

FIG. 1 is a flowchart showing known subtraction processing. In step 10, the same coordinates of a non-contrast image (pre-contrast image) 100 and contrast image (post-contrast image) 101 are associated with each other using non-rigid registration. A deformation field 102 is acquired by non-rigid registration. The deformation field 102 associates coordinates in the coordinate system of the non-contrast image 100 with those in the coordinate system of the contrast image 101.

In step 12, a non-contrast image (aligned pre-contrast image) 103 having undergone non-rigid registration is generated by applying the deformation field 102 to the non-contrast image 100. The anatomical feature of each point included in the aligned non-contrast image 103 coincides with the anatomical feature of a corresponding point at the same coordinates included in the contrast image 101.

In step 14, a subtraction image is generated by subtracting the Hounsfield value of each pixel of the contrast image 101 from the Hounsfield value of each pixel at the same coordinates included in the aligned non-contrast image 103.

In step 16, a subtraction image 104 undergoes rendering processing, generating a subtraction image 105 after rendering processing. The rendered subtraction image 105 will be simply referred to as the rendering image 105 hereinafter.

The rendering image 105 is, e.g., a two-dimensional slice, a two-dimensional multiplanar rendering (MPR) image, a slab MPR image, a curved MPR (CPR) image, a shaded volume rendering (SVR) image, or an intensity projection (IP) image (e.g., a maximum intensity projection (MIP) image, minimum intensity projection (MinIP) image, or average intensity projection (Average) image).

The rendering image 105 is, e.g., a grayscale image, and the grayscale value of a predetermined pixel corresponds to a subtraction between the pixel value of each pixel of the aligned non-contrast image and the pixel value of each corresponding pixel of the contrast image. Since the grayscale value of each pixel corresponds to a subtraction value, the subtraction image 104 includes only less information than the non-contrast image 100 and the contrast image 101. For example, a subtraction value "5" is obtained from a combination of a 5-HU CT value and a 10-HU CT value, or a combination of a 105-HU CT value and a 110-HU CT value.

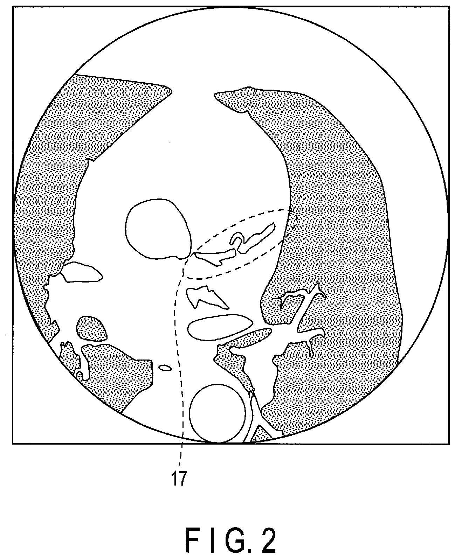

Interpretation of a subtraction image is difficult. For example, when interpreting a subtraction image defined by a grayscale of a single channel, it is difficult to discriminate an actual occlusion or stenosis in a blood vessel from an artifact generated by inaccurate alignment. FIG. 2 shows a subtraction image in which a heavily calcified coronary artery is drawn. An image area regarding the heavily calcified coronary artery is marked with an ellipse 17 of a broken line. It is difficult to interpret the portion marked with the ellipse 17 of the broken line owing to the difficulty of discrimination between a stenosis and an image artifact. When many calcium depositions exist in a blood vessel, it is difficult to determine whether a contrast medium flows through the blood vessel.

Segmentation is a process of dividing an image into pixels each having a predetermined feature, and classifying pixels representing a predetermined structure in the image for each structure. Here, a pixel generically means a two-dimensional image element (pixel) and a three-dimensional image element (voxel). In some cases, segmentation further includes separation of pixels from the remaining part of an image. The structure is, e.g., the anatomical structure of a blood vessel, organ, or the like, or an artificial structure such as a stent. By identifying and separating pixels representing a structure, further processing of information about the structure such as measurement of the structure can become easy, or the structure can be easily rendered by a method different from that for another structure in the image.

Segmentation of a blood vessel is used when identifying the lesion area of the blood vessel, for example, a calcium deposition area. For example, to execute stenosis measurement in a coronary artery, accurate segmentation of a blood vessel lumen and blood vessel wall is necessary.

Especially in a coronary artery blood vessel, it is difficult to achieve accurate, robust segmentation of the blood vessel. The resolution of the detector comes to the limit for a small blood vessel in some cases, and segmentation is therefore difficult. For example, segmentation of a blood vessel wall is difficult because, for example, the pixel value of the blood vessel wall and that of another soft tissue are similar. To classify a blood vessel area in a subtraction image, alignment needs to be performed accurately, and a method of recognizing an alignment error has not been established.

An automatic or semiautomatic blood vessel tracking algorithm is used to track a blood vessel area included in an image. However, it is difficult to track and segment a blood vessel area in a contrast image owing to the similarity between the pixel value of an image area (to be referred to as a blood vessel lumen area hereinafter) regarding a blood vessel lumen enhanced with a contrast medium, and the pixel value of an image area (to be referred to as a calcium area hereinafter) regarding calcium in calcium deposition.

Blooming sometimes makes calcium deposition unclear. Particularly when a calcium deposition area or a stent area exists, it sometimes complicates classification of a lumen. Blooming is an image artifact that makes a calcium deposition (or stent) area look larger than its actual physical range. Blooming arises from, e.g., a combination of artifacts such as beam hardening and a motion. It is known that blooming becomes more conspicuous in a contrast image than in a non-contrast image.

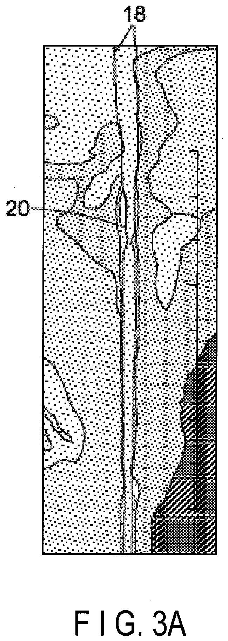

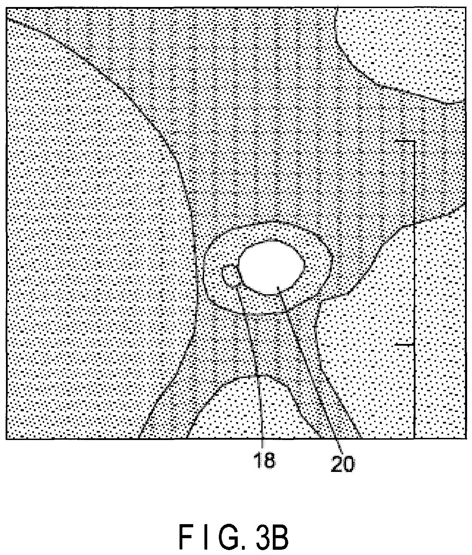

FIGS. 3A and 3B show the result of a known coronary artery blood vessel segmentation method executed on a contrast image. A large calcium deposition exists in a blood vessel to be segmented. FIGS. 3A and 3B show a coronary artery computed tomography angiography (CCTA) image representing a coronary artery blood vessel into which a contrast medium flows. FIG. 3A shows a CCTA image deformed so that the center line of a blood vessel area runs along a straight line. FIG. 3B shows a CCTA image regarding a section perpendicular to the center line. As shown in FIGS. 3A and 3B, a large calcium deposition area 20 has high pixels.

Segmentation of a lumen is executed on images corresponding to FIGS. 3A and 3B by using a known coronary artery blood vessel segmentation method. A segmentation boundary is indicated as a line 18 in each of FIGS. 3A and 3B.

A clinician evaluated the range of the lumen by using the same image data. It was found that the boundary 18 of the automatically segmented lumen indicated an area smaller than the area of the lumen evaluated by the clinician. In the known segmentation method, the size of a blood vessel lumen is underestimated owing to the influence of the relatively large calcium deposition area 20 in this known segmentation method for a contrast-enhanced set.

For this reason, a situation in which a clinician desires perfect confidence in the automatic or semiautomatic segmentation method has not come yet. When a lumen is underestimated or overestimated by automatic or semiautomatic blood vessel segmentation, the result of the segmentation algorithm may not yield a profit for a clinician.

US 2009/0022375 describes a system and process for combining multiple data sets to provide a composite dataset. EP2120208 describes a method and system for acquiring information on lesions in dynamic 3D medical images of a body region and/or organ.

BRIEF DESCRIPTION OF THE SEVERAL VIEWS OF THE DRAWINGS

The accompanying drawings, which are incorporated in and constitute a part of the specification, illustrate embodiments of the invention, and together with the general description given above and the detailed description of the embodiments given below, serve to explain the principles of the invention.

FIG. 1 is a flowchart showing conventional subtraction processing;

FIG. 2 is a view showing a subtraction image in which a heavily calcified artery is highlighted;

FIG. 3A is a view showing the result of exemplary known blood vessel segmentation in a contrast image;

FIG. 3B is a view showing the result of exemplary known blood vessel segmentation in the contrast image;

FIG. 4 is a block diagram showing an image processing apparatus according to an embodiment;

FIG. 5 is a flowchart showing processing to be executed in the image processing apparatus according to the embodiment;

FIG. 6 is a view showing a joint histogram representing a classified lumen area, unenhanced area, misalignment area, and blooming area;

FIG. 7A is a view showing a color model representing colors to be mapped on the joint histogram in FIG. 6;

FIG. 7B is a view showing an overlay image of the joint histogram shown in FIG. 6 and the color model shown in FIG. 7A;

FIG. 8 is a view showing an example of an image colored using the color model;

FIG. 9 is a view showing an example of an image colored using the color model;

FIG. 10 is a view showing the image of a blood vessel lumen representing a blooming area;

FIG. 11 is a flowchart showing processing to be executed in the image processing apparatus according to the embodiment;

FIG. 12 is a flowchart showing a detailed example of the processing shown in FIG. 11; and

FIG. 13 is a schematic view showing an imaged blood vessel to which classification processing is applied.

## DETAILED DESCRIPTION

In general, according to one embodiment, a medical image processing apparatus according to claim 1 includes a storage unit, a generation unit, and a segmentation unit. The storage unit configured to store a first medical image and second medical image regarding the same imaging region imaged at different times. The generation unit configured to generate numerical data representing a frequency of a combination of a pixel value of the first medical image and a pixel value of the second medical image at the same coordinates. The segmentation unit configured to divide the second medical image into a plurality of image areas by using the generated numerical data.

An image processing apparatus according to an embodiment will now be described with reference to the accompanying drawings. Note that the same reference numerals denote parts having almost the same functions and arrangements in the following description, and a repetitive description is made only if necessary.

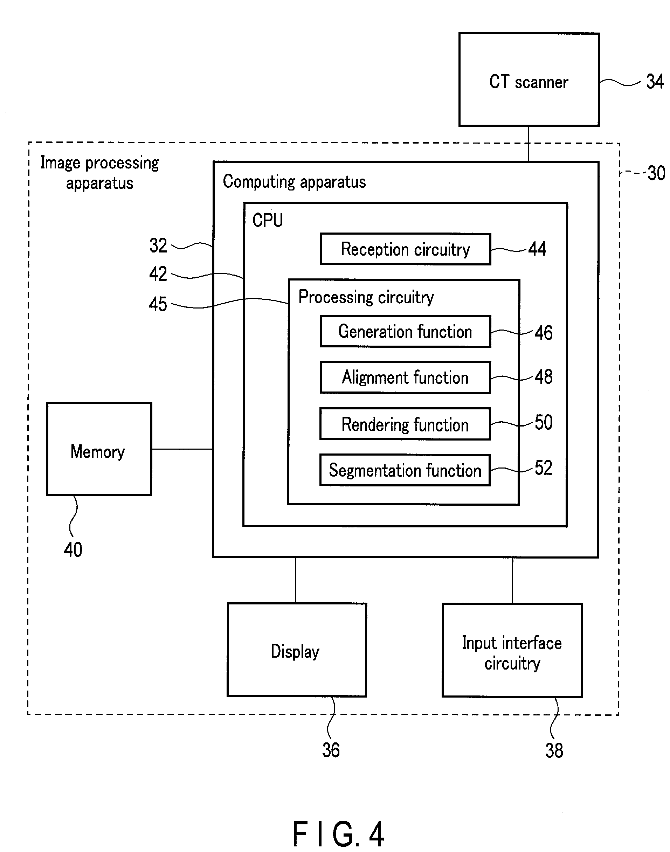

FIG. 4 is a block diagram showing an image processing apparatus 30 according to the embodiment. As shown in FIG. 4, the image processing apparatus 30 includes a computing apparatus 32. The computing apparatus 32 is, e.g., a personal computer (PC) or a work station. The computing apparatus 32 is connected to a CT scanner 34, one or a plurality of displays 36, and one or a plurality of input interface circuitry 38 including a computer keyboard, a mouse, or a trackball.

The CT scanner 34 collects projection data by performing a CT scan of an object with X-rays, and reconstructs a CT image regarding the object based on the collected projection data. In the embodiment, the CT scanner 34 generates the first and second medical images regarding the same imaging region imaged at different times. For example, the CT scanner 34 executes a contrast CT scan by performing a CT scan of an imaging region in which the contrast is enhanced with a contrast medium, and executes a non-contrast CT scan by performing a CT scan of an imaging region in which the contrast is not enhanced with the contrast medium. The imaging region is arbitrary. In a contrast scan and a non-contrast scan, an arbitrary proper blood vessel system, for example, a heart, head, neck, effluent, or lung is proper. The CT scanner 34 reconstructs a contrast image based on projection data collected by a contrast CT scan, and reconstructs a non-contrast image based on projection data collected by a non-contrast CT scan. The execution order of the contrast CT scan and non-contrast CT scan is arbitrary. The CT scanner 34 may reconstruct one image as a contrast image and a non-contrast image, or reconstruct time-series images. In the embodiment, the CT scanner 34 may obtain, as an image, a slice constructed by a plurality of pixels arrayed in a two-dimensional coordinate space, or a volume constructed by a plurality of voxels arrayed in a three-dimensional coordinate space. The CT scanner 34 may be a scanner in another arbitrary imaging form, such as an MRI (Magnetic Resonance Imaging) scanner, an X-ray scanner, a PET (Positron Emission Tomography) scanner, or a SPECT (Single Photon Emission Computed Tomography) scanner.

The first and second medical images regarding the same imaging region imaged at different times are not limited to a contrast image and a non-contrast image. For example, the first medical image may be a preoperative image, and the second medical image may be a postoperative image. The preoperative image is reconstructed based on projection data collected by performing a CT scan of an object before an operation by the CT scanner 34. The postoperative image is reconstructed based on projection data collected by performing a CT scan of the object after the operation by the CT scanner 34. To give the following explanation concretely, assume that the first medical image is a contrast image, and the second medical image is a non-contrast image.

In the embodiment, a set of images collected by the CT scanner 34 is stored in a memory 40, and provided from the memory 40 to the computing apparatus 32. Note that a set of images may be supplied from a remote data store (not shown) forming part of a picture archiving and communication system (PACS). The memory 40 or the remote data store may include a memory storage of an arbitrary proper form.

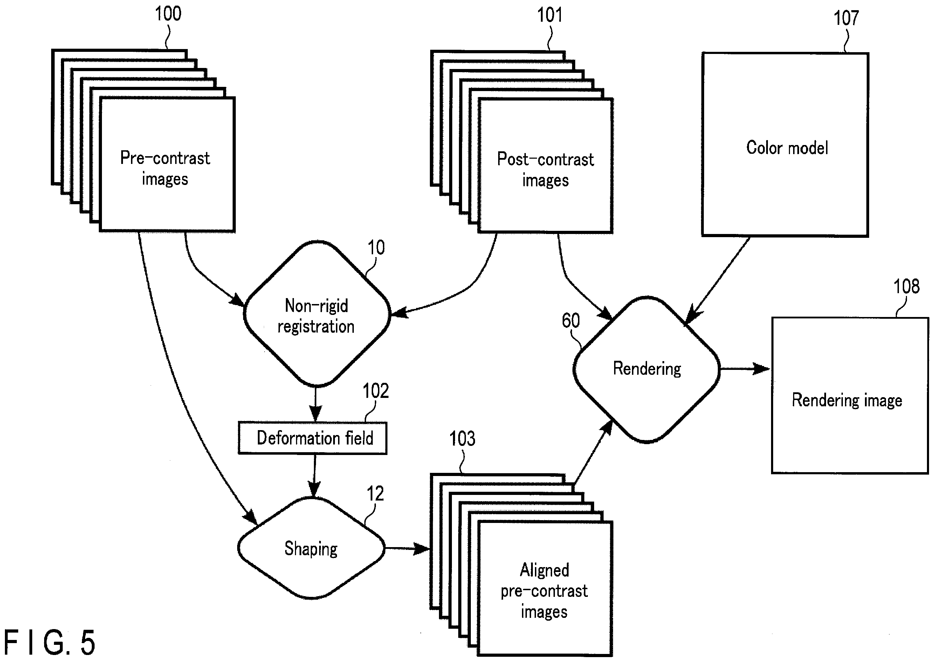

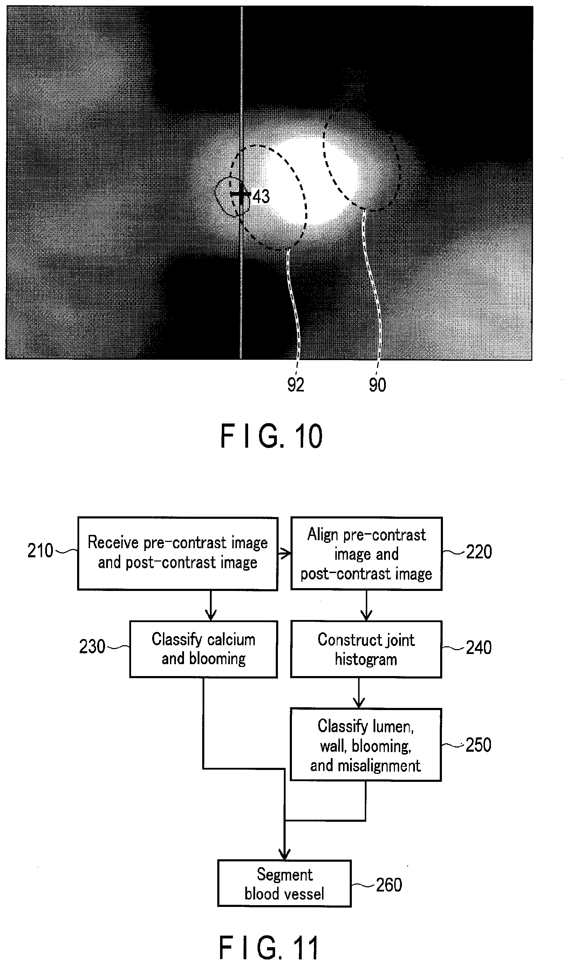

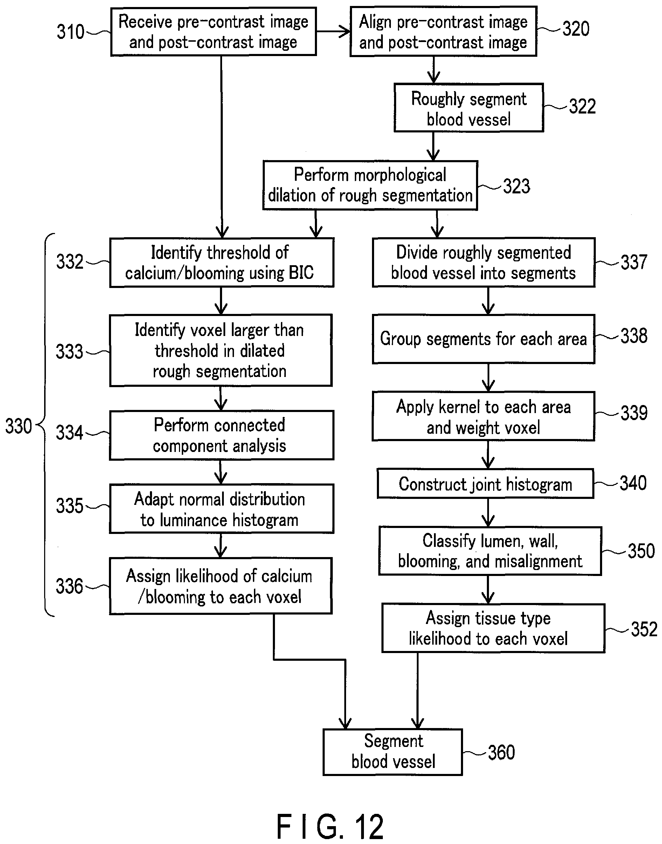

The computing apparatus 32 includes a processing resource for automatically or semiautomatically processing image data. The computing apparatus 32 includes a central processing unit (CPU) 42 that is configured to execute a method described below with reference to FIG. 5 and a method described below with reference to FIGS. 11 and 12, and performs an operation of loading and executing various software modules or other software building elements.

The computing apparatus 32 includes reception circuitry 44 and processing circuitry 45. In the embodiment, the processing circuitry 45 includes, as hardware resources, a processor such as a CPU or MPU, and memories such as a ROM and RAM. The memory of the processing circuitry 45 stores a plurality of corresponding programs for implementing a plurality of functions in the processing circuitry 45. For example, the processing circuitry 45 implements a generation function 46, an alignment function 48, a rendering function 50, and a segmentation function 52 by reading out corresponding programs from the memory and executing them.

The processing circuitry 45 uses the generation function 46 to generate numerical data representing the frequency of a combination of the pixel value of a contrast image and the pixel value of a non-contrast image at the same coordinates. The numerical data is, e.g., a joint histogram visually expressing the frequency of a combination of the pixel value of a contrast image and the pixel value of a non-contrast image in a two-dimensional orthogonal coordinate system using the pixel value of the contrast image and the pixel value of the non-contrast image as two axes. Note that the numerical data according to the embodiment is not limited to the joint histogram and may be data of a format in which the frequency of a combination of the pixel value of a contrast image and the pixel value of a non-contrast image is not visually expressed in the two-dimensional orthogonal coordinate system. In the embodiment, the numerical data is assumed to be a joint histogram.

The processing circuitry 45 uses the alignment function 48 to align the contrast image and the non-contrast image. For example, the processing circuitry 45 generates an aligned non-contrast image by aligning the non-contrast image with respect to the contrast image.

The processing circuitry 45 uses the segmentation function 52 to classify a plurality of areas included in the contrast image or the non-contrast image by using the generated joint histogram. More specifically, the processing circuitry 45 classifies the contrast image into an artifact area and a non-artifact area. The processing circuitry 45 classifies the artifact area and the non-artifact area by likelihoods corresponding to the respective areas. The processing circuitry 45 classifies the plurality of areas into a misalignment area and a blooming area as the artifact area. Also, the processing circuitry 45 classifies the plurality of areas into a contrast area and a non-contrast area as the non-artifact area. The contrast area is a lumen area, and the non-contrast area is a vessel wall area.

The processing circuitry 45 uses the rendering function 50 to perform rendering processing on the contrast image or the non-contrast image and generate a two-dimensional display image (to be referred to as a rendering image hereinafter). In the embodiment, the processing circuitry 45 generates, based on the contrast image or the non-contrast image, a rendering image in which a plurality of classified areas can be visually identified using the classification regarding the plurality of areas.

In the embodiment, the reception circuitry 44 and the processing circuitry 45 are implemented in the computing device 32 by using a computer program having computer readable instructions executable to perform the method described below with reference to FIG. 5 and the method described below with reference to FIGS. 11 and 12. However, the plurality of functions mentioned above may be implemented by one or a plurality of ASICs (Application Specific Integrated Circuits), FPGAs (Field Programmable Gate Arrays), or the like.

The computing apparatus 32 includes, as hardware resources, a hard drive, and other PC building elements such as a RAM, a ROM, a data bus, an operating system including various device drivers, and hardware devices including a graphics card.

The image processing apparatus shown in FIG. 4 is configured to execute a series of steps shown as an outline in the flowchart of FIG. 5. The image processing apparatus shown in FIG. 4 is configured to execute a series of steps shown as an outline in the flowchart of FIG. 11 or 12.

Referring to FIG. 5, in step 10, the reception circuitry 44 receives a set of non-contrast images 100 and a set of contrast images 101 from the memory 40 or the remote data store or directly from the CT scanner 34. The non-contrast image 100 and the contrast image 101 represent an area of an object. In the embodiment, for example, the area is a coronary artery and the object is a human patient. The non-contrast images 100 are collected by a calcium scoring scan of the coronary artery of the patient. The contrast images 101 include volume data representing the coronary artery of the same patient.

Note that a non-contrast image is not limited to an image targeting an imaging region where a contrast medium is completely absent, but may be an image targeting an imaging region where a contrast medium of an extremely low density is present. Such a non-contrast image includes, e.g., a perfusion image. A non-contrast image may be an image in which a contrast medium is absent in a region of clinically interest, but present in a region of clinically no interest. For example, in a coronary artery blood vessel image, the contrast medium is present in the heart and has not reached a coronary artery blood vessel yet in some cases.

Arbitrary images may be used from two or more arbitrary proper scans. In two scans, a contrast medium exists. For example, two scans from perfusion data are used.

The reception circuitry 44 may receive a set of images collected from dynamic contrast enhanced (DCE) imaging such as a DCE scan of a liver. In the DCE scan of the liver, the contrast portion moves around through various phases of DCE imaging.

The non-contrast image 100 and the contrast image 101 are described as CT images in the embodiment, but are not limited to them. The non-contrast image 100 and the contrast image 101 may be, e.g., MR images. The non-contrast image may be one of a CT image and MR image, and the contrast image may be the other image. The MR image makes it possible to discriminate tissues having the same HU value in the CT image.

The reception circuitry 44 supplies the non-contrast image 100 and the contrast image 101 to the processing circuitry 45. The processing circuitry 45 uses the alignment function 48 to generate a deformation field 102 by executing registration on the non-contrast image 100 and the contrast image 101. The processing circuitry 45 applies the generated deformation field 102 to one of the non-contrast image 100 and contrast image 101 to shape the image so as to match the other image. As a result, the contrast image and the non-contrast image are aligned.

More specifically, the processing circuitry 45 executes non-rigid registration on the non-contrast image 100 and the contrast image 101. Registration is processing of associating anatomically coincident pixels included in the non-contrast image 100 and the contrast image 101. For example, as arbitrary proper non-rigid registration, a method described in M. Razeto, B. Mohr, K. Arakita, J.D. Schuijf, A. Fuchs, J.T. Kuhl, M.Y. Chen, and K.F. Kofoed, "Accurate, fully-automated registration of coronary arteries for volumetric CT digital subtraction angiography", Proc. SPIE9034, 90343F-90343F-7 (2014) is used.

Note that registration may be executed using arbitrary proper registration such as an arbitrary proper method out of non-rigid registration, rigid registration, or affine registration. Registration is adjusted to a specific anatomical structure (e.g., a coronary artery).

By non-rigid registration, the processing circuitry 45 generates the deformation field 102 based on the non-contrast image 100 and the contrast image 101. The deformation field 102 is a map defining, for each pixel, the correspondence between a pixel of the non-contrast image 100 and a pixel of the contrast image 101 that anatomically coincide with each other.

In step 12, the processing circuitry 45 serves as the alignment function 48 to generate an aligned non-contrast image 103 by applying the deformation field 102 to the non-contrast image 100. Pixels of the aligned non-contrast image 103 and contrast image 101 at the same coordinates even anatomically coincide with each other. The deformation field 102 is applied to the pre-contrast image 100 in the above example, but is not limited to this. For example, the deformation field 102 may be applied to the post-contrast image 101. The aligned non-contrast image 103 is calculated in advance in step 12 in the embodiment, but is not limited to this. The aligned non-contrast image 103 may not be calculated in advance. In this case, a cached version of the aligned non-contrast image 103 is not stored, and the deformation field 102 and the non-contrast image 100 are used to generate an appropriate sample of the non-contrast image, as needed.

The non-contrast image 100 and the contrast image 101 may be aligned in advance before received by the reception circuitry 44. In this case, step 10 and step 12 can be omitted for alignment. Also, when the non-contrast image 100 and the contrast image 101 are aligned even without performing alignment processing, step 10 and step 12 can be omitted.

The non-contrast images 103 and the contrast images 101 are described as separate image sets in the embodiment, but are not limited to this. One image set may include the non-contrast images 103 and the contrast images 101

In step 60, the processing circuitry 45 receives the aligned non-contrast image 103 and the contrast image 101. At the time of rendering, the processing circuitry 45 receives a color model 107 from the memory 40 or the like. The color model 107 associates a pixel value with a rendering parameter. The color model 107 may be a function that associates a pixel value with a rendering parameter, a table, or a map visually expressing a pixel value and a rendering parameter. As rendering parameters, the color and opacity are proper. The color model 107 has two or more dimensions.

More specifically, in step 60, the processing circuitry 45 generates a joint histogram based on pixel values from the aligned non-contrast image 103 and pixel values from the contrast image 101, and divides the contrast image 101 or the non-contrast image 103 into a plurality of areas by using the joint histogram. Then, the processing circuitry 45 generates, from the contrast image 101 or the non-contrast image 103, a rendering image 108 in which colors are assigned to the divided areas by using the color model.

The segmentation function 52 in the processing circuitry 45, the joint histogram, and the color model will be described in detail.

The joint histogram is defined to represent the frequency distribution of a combination of a pixel value from the aligned non-contrast image 103 and a pixel value from the contrast image 101.

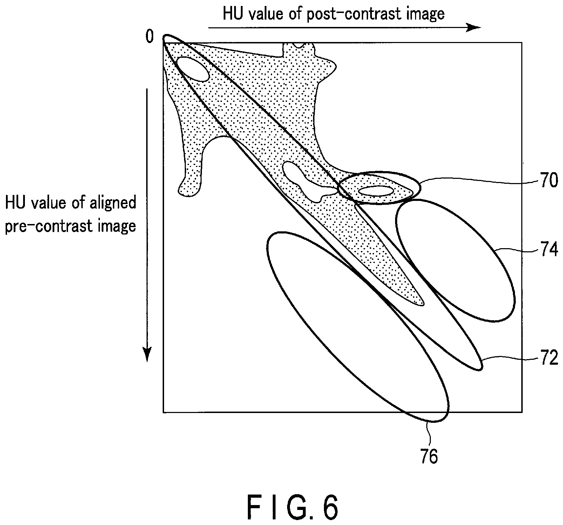

FIG. 6 shows an example of the joint histogram. The ordinate of the joint histogram indicates the first pixel value (pixel value in the aligned non-contrast image 103) by the Hounsfield unit (HU). The abscissa of the joint histogram indicates the second pixel value (pixel value in the contrast image 101) by the Hounsfield unit (HU).

The joint histogram has a plurality of bins of the same size. Each pixel has the first pixel value and second pixel value (a pixel of a non-contrast image and a pixel of a contrast image) fitting in a two-dimensional bin within the joint histogram. In other words, each pixel in image data is assigned to a bin corresponding to a pair of the first and second pixel values. Each pixel has the positions of the first pixel and second pixel on the two-dimensional distribution.

The number of pixels in the bin is represented by hatching in FIG. 6. In practice, hatching corresponds to a color value. For example, a bin not including a pixel is white. A bin including only a few pixels is light gray, and as more pixels are added, the bin becomes darker gray. A bin including very many pixels is colored in orange.

In the joint histogram, the first pixel value (pixel in the aligned non-contrast image 103) of each pixel and the second pixel value (pixel in the contrast image 101) of the pixel are plotted. In some cases, various materials (e.g., various tissue types) have at least one of various first pixels and various second pixels. A pixel representing various types is sometimes assigned to bins in various areas of the joint histogram. A plurality of pixels representing the same tissue type form a cluster in a specific area of the joint histogram.

When the pixel values of pixels of two non-contrast images are plotted on a joint histogram plot, values are predicted to be clustered on a diagonal line. It is predicted that pixels representing air are positioned in a bin present at an upper left portion (low pixels in two scans) of the plot, a soft tissue is positioned in a bin present at the center of the plot, and a bone is positioned in a bin extending toward a lower right portion (high pixels in the two scans).

When a contrast medium is added, a spinal process extending right from the value of the soft tissue (having different positions along the axis of pixels in which the contrast is enhanced by various amounts of the contrast medium) is sometimes observed in the joint histogram plot.

The embodiment hypothesizes that pixels representing a predetermined tissue type form a cluster of points having a two-dimensional Gaussian distribution in the joint histogram, and a two-dimensional Gaussian function is adapted to the cluster and determines the distribution.

Similarly, the embodiment hypothesizes that pixels arising from a specific image artifact are sometimes generated in a specific area of the joint histogram, and pixels arising from an image artifact of a predetermined type form a cluster of points having a two-dimensional Gaussian distribution in the joint histogram. A two-dimensional Gaussian function is adapted to the cluster and determines the distribution.

The processing circuitry 45 serves as the segmentation function 52 to determine a mean, variance, and weight for each of four Gaussian distributions representing distributions respectively corresponding to a contrast area (e.g., a lumen), a non-contrast area (e.g., a vessel wall), a blooming area, and a misalignment area. By determining a mean, variance, and weight for each distribution, the processing circuitry 45 specifies each cluster area for each of clusters corresponding to points on the joint histogram. Each cluster area can represent the position and range of a cluster corresponding to points.

In the embodiment, the processing circuitry 45 determines the mean, variance, and weight of a Gaussian distribution by using a k-means algorithm in cooperation with an expectation maximization (EM) algorithm. In another embodiment, an arbitrary proper technique is sometimes used to determine a mean, variance, and weight. In a given embodiment, a two-dimensional distribution is not the Gaussian type in some cases.

The four determined Gaussian distributions (lumen area, non-contrast area, blooming area, and misalignment area) are represented by four ellipses 70, 72, 74, and 76 in FIG. 6, and will be considered subsequently below. The ellipses 70, 72, 74, and 76 do not accurately represent the determined Gaussian distributions, but are rather general indicators of target areas where Gaussian distributions are generated.

The lumen distribution (ellipse 70) corresponding to the lumen area is the distribution of pixels representing a contrast-enhanced blood vessel area. Since the contrast medium is added to enhance the pixels of blood, pixels representing the contrast-enhanced blood vessel area are predicted to have higher values in a contrast image than in a non-contrast image. The amount of the contrast medium sometimes changes in a blood vessel or between blood vessels, and the pixel enhancement amount also sometimes changes. Hence, pixels corresponding to the contrast-enhanced blood vessel area are predicted to be clustered on a joint histogram plot as a spinal process positioned parallel to the abscissa.

In the unenhanced area distribution (ellipse 72) corresponding to the non-contrast area, the pixel value substantially does not change between a non-contrast CT scan and a contrast CT scan. That is, the pixel value of a pixel of a non-contrast image and the pixel value of a pixel of a contrast image are almost equal. Pixels having almost the same pixel value are positioned on the diagonal line of the joint histogram or its periphery. A variation from the diagonal line is sometimes generated as a result of noise or misalignment.

The blooming distribution (ellipse 74) corresponding to the blooming area is the distribution of pixels in which the pixel value of a pixel of a contrast image is larger than the pixel value of a pixel of a non-contrast image, but the pixel value of the pixel of the contrast image deviates from a predicted pixel value range of non-contrast pixels. The blooming distribution includes pixels representing blooming, and also includes pixels accompanied by an increase in pixels arising from misalignment. Blooming is predicted to be larger in a contrast image than in a non-contrast image.

The misalignment distribution (ellipse 76) corresponding to the misalignment area is the distribution of pixels in which the pixel value of a pixel of a contrast image is smaller than the pixel value of a pixel of a non-contrast image. Since it is not predicted that pixels should decrease in any anatomical area upon adding a contrast medium, pixels representing a decrease in pixels between a non-contrast CT scan and a contrast CT scan sometimes coincide with an area where alignment is potentially inaccurate. That is, when the correspondence (alignment) between pixels is erroneously determined, pixels in the non-contrast CT scan have pixels higher than pixels predicted to correspond to pixels in the contrast CT scan.

When the position of a target (e.g., calcium deposition) in an image shifts, there are pixels on one side of the target on which pixels seem to rise from the non-contrast image to the contrast image, and pixels on the other side of the target on which pixels seem to lower from the non-contrast image to the contrast image. In practice, there is sometimes an error in alignment yielding a result in which pixels serving as part of calcium deposition are erroneously mapped in pixels not serving as part of calcium deposition though pixels do not change.

After determining means, variances, and weights for the four Gaussian distributions, the processing circuitry 45 serves as the segmentation function 52 to determine the color model 107 using the determined distributions (determined positions and ranges of respective clusters of points on the histogram). The color model 107 indicates mapping of a pair of pixel values (non-contrast pixel and contrast pixel) to a color value. When an image is rendered using the color model, pixels serving as part of one distribution are discriminated from pixels serving as part of another distribution.

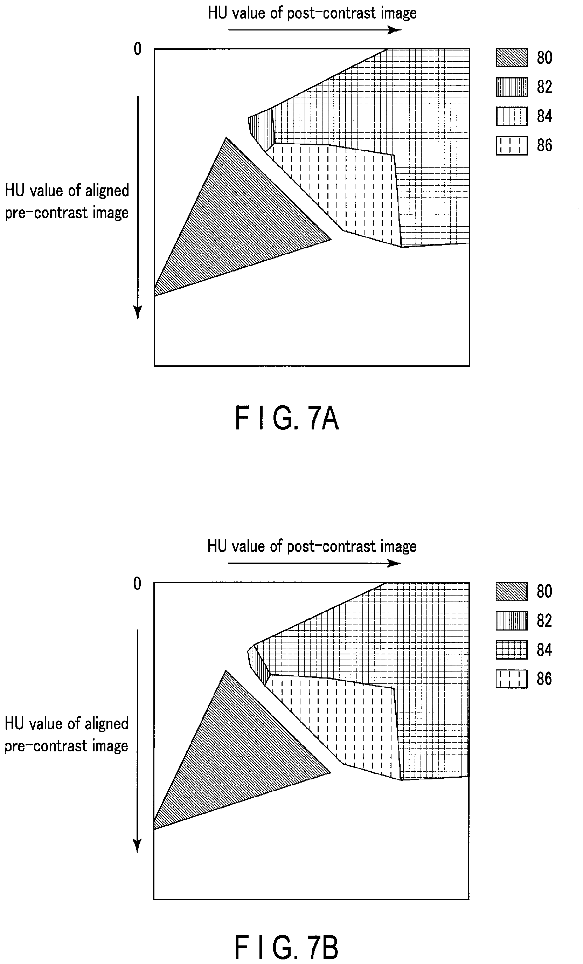

In the embodiment, the processing circuitry 45 determines the color model 107 by specifying a plurality of areas (areas 80, 82, 84, and 86) on the joint histogram. FIG. 7A shows the color model 107. The area 80 is a triangular area of the joint histogram. The area 80 includes pixels representing a decrease in pixels from the non-contrast image to the contrast image. The area 80 includes at least part of the misalignment distribution 76. The area 82 is a triangular area of the joint histogram. The area 82 includes pixels representing an enhanced soft tissue. The area 82 includes at least part of the lumen distribution 70, and the position is specified by referring to the lumen distribution 70. The area 84 is a contrast area in the contrast image. The area 84 includes at least part of the lumen distribution 70, particularly, a high-contrast area. The area 86 typifies pixels having an increase in pixels between the non-contrast image and the contrast image, and the non-contrast pixel is higher than the non-contrast pixel of blood. The area 86 includes at least part of the blooming distribution 74.

FIG. 7B shows the joint histogram in FIG. 6 that is overlaid on the color model in FIG. 7A. In the embodiment, for example, the area 80 is colored in green, the area 82 is colored in red, the area 84 is colored in yellow, and the area 86 is colored in magenta. Red and yellow are used to represent main contrast portions.

Further, in the embodiment, the processing circuitry 45 uses the segmentation function 52 to generate the color model in two stages. For example, a grayscale layer corresponding to an average gray value is generated for a specific pair of window/level gradients for the X- and Y-axes.

Then, the processing circuitry 45 generates the second layer by using simple triangular meshes. Each vertex of the triangular mesh has color and opacity values. Pixels in the second layer have their colors and opacities determined by interpolating intervals between vertices included in the triangular meshes.

Further, the second layer is composited on the grayscale table, giving a final color model. The composition of the first and second layers sometimes includes alpha blending. The grayscale layer makes a non-contrast area look like the same area as that when observed on a standard two-dimensional slice viewer.

Note that the color model may be generated using an arbitrary proper automatic or manual method.

In some cases, each area of the joint histogram has variations of the color in the area. For example, the color of the center of the area is brighter than the color of the edge of the area. In another embodiment, an arbitrary color or optical characteristic is used. For example, not only the color varies, but also the area becomes dull, glossy, or transparent. Specified areas of the joint histogram sometimes overlap each other. In this case, the colors or optical characteristics are sometimes composited by an arbitrary proper method. For example, the colors are sometimes averaged. In the embodiment, color blending represents approach to a predetermined area of the histogram.

The processing circuitry 45 uses the segmentation function 52 to specify X and Y grayscale gradients. The grayscale gradients are included in the color model 107. The gradient does not cover the full range of pixel data in general, but is sometimes configured so that the value changes in the entire target range. Although the gradient (linear change) is used in the embodiment, the present invention is not limited to this and a nonlinear change is used in some cases. Specifying a target range is sometimes called window leveling. The processing circuitry 45 uses the segmentation function 52 to execute window leveling on image data, and can specify a grayscale gradient. The color model 107 is set to display a view having undergone window leveling of the aligned non-contrast image 103, the contrast image 101, or a combination of the aligned non-contrast image 103 and contrast image 101.

In the embodiment, the color model 107 is determined based on the aligned non-contrast image 103 and the contrast image 101. Note that the user sometimes determines the color model 107 entirely or partially. For example, a joint histogram is displayed on the display 36. The user finds out a visible tip and spinal process, highlights an area by using, e.g., the input interface circuitry 38, and defines the boundary of an appropriate area of the joint histogram. The processing circuitry 45 serves as the segmentation function 52 to specify the areas 80, 82, 84, and 86 based on the area defined by the user.

In the embodiment, four Gaussian distributions are determined from the joint histogram. In another embodiment, an arbitrary number of distributions are sometimes determined. In some cases, each distribution represents an arbitrary proper area of the joint histogram such as an arbitrary area including pixels indicating a tissue type, or an arbitrary area including pixels indicating an artifact.

Note that the segmentation function 52 may determine the distributions of a lumen area, non-contrast area, blooming area, and misalignment area, and display these distribution charts on the joint histogram. Based on the determined distributions, the user specifies areas in the color model such as colored areas.

The determined color model 107 is stored as a table for mapping the pixels of input values (first and second pixel values) to respective color values. In another embodiment, the color model is sometimes stored in an arbitrary proper format. For example, the ranges of the areas 80, 82, 84, and 86 are sometimes stored as a set of the functions of the first and second pixel values. For example, for the color model 107 shown in FIG. 7A, a set of triangles is stored, and each color value is reconstructed from triangles in some cases. An arbitrary proper table or function is sometimes used.

The color model 107 is calculated in advance in the embodiment, but is not limited to this. The color model 107 may not be calculated in advance. The color model 107 in which a specific view needs to be rendered is calculated, as needed.

The range of the color model is clamped to a proper data range to prevent excessive enlargement of the table. In some cases, the color model is calculated at a reduced resolution, and interpolation is used during rendering in order to derive a necessary value.

The processing circuitry 45 serves as the rendering function 50 to render the image of a slice in step 60. The resultant rendering image 108 includes information derived from both the non-contrast image and the contrast image.

In order to render the image of the slice, the processing circuitry 45 serves as the rendering function 50 to determine a set of points in an image volume that correspond to respective pixels of the rendered image. The points are positioned on the target slice.

In the embodiment, points on the slice are sometimes determined in the aligned non-contrast image 103 or in the contrast image 101. The aligned non-contrast image 103 and the contrast image 101 have the same coordinate system. In another embodiment, points on the slice are identified in the contrast image 101, and the deformation field 102 is used to determine corresponding points in the non-contrast image 100.

The processing circuitry 45 serves as the rendering function 50 to search for the first pixel value for a corresponding point in the aligned non-contrast image 103 (e.g., by interpolating adjacent pixels) and the second pixel value for a corresponding point in the contrast image 101 for each pixel. Then, the processing circuitry 45 serves as the rendering function 50 to index the table by using the first and second pixel values at the point. An output color for the pixel is determined. The output color for the pixel is a color value associated with a pixel pair:

$$\mathtt{output\ color\ =\ table\ (post,\ pre)\quad ...(1)}$$

where table is the table representing the color model, pre is the pixel value of a point in the aligned non-contrast image 103, and post is the pixel value of a point in the contrast image 101. The color model 107 is used to color a pixel based on the Hounsfield values of the corresponding points in the two volumes.

In the embodiment, the color is assigned as one rendering parameter to each pixel. In another embodiment, another optical characteristic such as the brightness, texture, opacity, transparency, shadow, matte surface effect, or glossy surface effect may be assigned as a rendering parameter to each pixel.

The rendering image 108 provides a blended view including pieces of information from both the aligned non-contrast image 103 and the contrast image 101. The rendering image 108 can have much more information contents than a conventional subtraction image.

At least one of various tissue types and artifacts is visually discriminated in the rendering image 108 by specifying a plurality of areas and assigning at least one of various colors and optical characteristics to various areas. The first tissue type or artifact can have pixels falling in the first area of the joint histogram. The second tissue type or artifact can have pixels falling in the second area of the joint histogram. By coloring points in the first area to differ from points in the second area, the first tissue type or artifact is visually discriminated from the second tissue type or artifact in the rendering image 108.

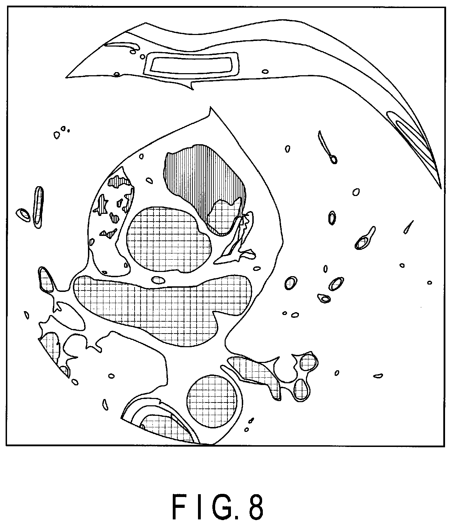

FIG. 8 shows an example of the rendering image 108. FIG. 8 shows the image of an aorta that includes contrast medium absorption rates (red and yellow) and blooming (magenta), does not include misalignment (green), and is colored using the color model. Each pixel in the image of FIG. 8 is colored based on the first pixel value of a corresponding point in the aligned non-contrast image 103 and the second pixel value of a corresponding point in the contrast image 101. An area with a low contrast medium absorption rate is colored in red. An area with a high contrast medium absorption rate is colored in yellow. An area with a contrast absorption rate influenced by a boom artifact adjacent to the first pixel value is colored in magenta.

A grayscale value is used at a portion where there is no large subtraction between the first and second pixel values. The grayscale gradient is based on the blend of window levels in the non-contrast image and the contrast image.

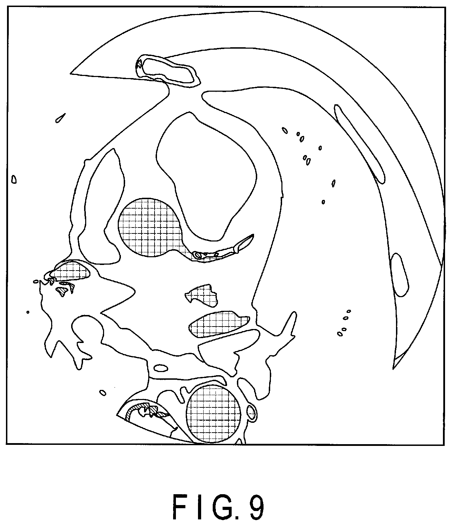

FIG. 9 shows another image of the aorta colored using the color model in FIG. 7A. A green area indicates an alignment problem. In the example of FIG. 9, a motion is generated between a non-contrast CT scan and a contrast CT scan. Calcium deposition influenced by the motion has the area of decreased pixels in the contrast CT scan, compared to the non-contrast CT scan. Owing to erroneous alignment of the calcium deposition, one side of the calcium deposition becomes green (decrease in pixels), and the other side of the calcium deposition becomes magenta or orange (increase in pixels). Slightly greenish magenta means that there is no alignment error and thus the magenta area may represent not misalignment but blooming.

A non-contrast image and a contrast image are composited by single visualization. Generally speaking, the grayscale value in FIG. 9 corresponds to an aligned non-contrast image. In the embodiment, a pixel with a grayscale value is the composition of a pixel value from the non-contrast image and a pixel value from the contrast image. In another embodiment, the grayscale value is sometimes set to indicate a non-contrast image, a contrast image, or a blend between a non-contrast image and a contrast image.

When only a grayscale gradient exists in the color model of FIG. 7A, the resultant image 108 looks like a conventional MPR image having undergone window leveling of a subtraction. A larger amount of information is provided to the user by adding a color using the color model 107.

In the embodiment, the rendering image 108 is a two-dimensional slice. In another embodiment, a rendered image is an image of an arbitrary proper type such as a two-dimensional slice, a two-dimensional multiplanar rendering (MPR) image, a slab MPR image, a curved MPR image, a shaded volume rendering (SVR) image, or an IP image.

In the embodiment, a color value is determined for only a point on a slice that corresponds to a pixel of the rendering image 108. In another embodiment, a color value (or another optical characteristic) is sometimes determined for an arbitrary proper pixel or point in the image.

A color value may be acquired for a point in the three-dimensional area of the contrast image 101 (or the aligned non-contrast image 103), and the color value of each pixel of the rendering image 108 may be acquired by compositing the color values of a plurality of points in the three-dimensional area. For example, a slab image may be acquired by compositing points from a plurality of slices.

In the embodiment, the color model is determined using the joint histogram that typifies all pixels in the contrast image 101 having corresponding pixels in the aligned non-contrast image 103, but is not limited to this. At least either of the joint histogram and color model may be determined using image data. For example, the joint histogram may be obtained by plotting only pixels serving as part of a slice to be rendered, and the color model may be determined based on pixels in the joint histogram. The joint histogram is sometimes obtained by plotting only pixels from one or a plurality of segmented areas of a contrast image. For example, the joint histogram may be obtained by plotting only pixels in an area around a segmented coronary artery.

In the embodiment of FIG. 5, the processing circuitry 45 serves as the segmentation function 52 to automatically determine the color model 107 from the joint histogram, but is not limited to this. The processing circuitry 45 serves as the segmentation function 52 to load an existing color model in some cases, and the color model may not be determined from a processing target image.

The color model 107 is determined before the processing in FIG. 5. For example, the color model 107 may be determined using data from one or a plurality of patients different from a patient imaged by the processing in FIG. 5. The color model 107 determined in advance based on a group constituted by one or a plurality of patients is used in visualization of data from another patient.

In some cases, the first color model is adapted to a scan under consideration by using a joint histogram analysis. A cluster analysis (e.g., a Gaussian mixture model adapted to the k-means and expectation maximization) is sometimes used to find out the position and range of a contrast spinal process, and positioning of red and yellow gradients is executed.

The rendering image 108 colored using the color model is displayed on the display 36. Note that the user can control the form of visualization. For example, the user can control contribution of part or all of at least either of a color and optical characteristic assigned to the rendering image 108. More specifically, the user can control ranges in which red, yellow, magenta, and green are displayed in an image. In several situations, the user wants to completely remove these colors so that he can see a grayscale value below. Removing red, yellow, magenta, and green yields a conventional subtraction image used to see by the user. The user can control grayscale mapping so as to attenuate an underlying image between a non-contrast CT scan and a contrast CT scan.

The user can control visualization by, for example, using a slider, selecting a preset, or making a selection between thumbnails by an arbitrary proper method. In several embodiments, the slider is used to control the levels (e.g., green, yellow, red, and magenta) of colors to be applied to an image. The slider can control the importance of overlay of a color. For example, the user can reduce the amount of a color in an image by moving the slider. Note that the user can individually control the level of each color. For example, when the user is interested especially in finding out misalignment, he can increase the brightness of a green area in an image.

Grayscale mapping in a rendered image sometimes represents a non-contrast image, a contrast image, or the composition of a non-contrast image and contrast image. The slider may be used to control grayscale mapping. A color is overlaid on a non-contrast image at one end of the slider. A color is overlaid on a contrast image at the other end of the slider. At the center of the slider, a color is overlaid on an image (e.g., an image using a subtraction value) that uses the composition of contrast and non-contrast. Accordingly, the user can control relative contribution of the first and second pixel values to the rendering image 108.

Visualization using colors determined by the color model can provide a more intuitive interpretation than a conventional grayscale subtraction image. Calcium can also be observed and can be easily discriminated from a contrast-enhanced blood vessel area. In several difficult cases, color visualization facilitates reading, compared to a conventional grayscale subtraction image. Learning becomes quick not by reading a grayscale subtraction image but by reading colored visualization . Colored visualization is sometimes used to observe a chronic occlusion. In several situations, a coronary artery disease can be easily diagnosed using colored visualization.

The method in FIG. 5 can provide visualization in which two channels (contrast and non-contrast) are saved and a larger amount of information is held in comparison with a normal subtraction image. By using not scalar visualization but multichannel visualization, the user can identify a portion at which he is not confident in alignment. The method in FIG. 5 can visualize blooming rather than a lumen.

Note that a method of visualizing a contrast-enhanced blood vessel may be provided. This method includes an alignment engine that generates a common reference system for two image sets from a single form, and a rendering engine that samples corresponding points in the two data sets, generates a pair of data values, searches for a color model by using the pair of data values, generates processed data values, and uses the processed data values while a display image is generated.

The first data set out of the two image sets is a contrast image. The second data set out of the two image sets is a non-contrast image. The rendering engine outputs one of a two-dimensional slice viewer, MPR slab, curved slab, IP, and SVR.

The color model is set up so as to color identified clusters in the joint histogram in different ways. The identified clusters indicate a contrast-enhanced blood vessel area, a blooming artifact, and the inaccuracy of alignment.

The color model is set up so as to present a view having undergone window leveling of a non-contrast CT scan, a contrast CT scan, or a weighted blend of both a non-contrast CT scan and contrast CT scan. Note that a two-dimensional color model may be used when compositing a non-contrast image and a contrast image, and a one-dimensional color model may be used when individually displaying a non-contrast image and a contrast image.

Determination of distributions in a joint histogram (e.g., determination of the distributions of a lumen area, unenhanced area, blooming area, and misalignment area described with reference to FIG. 5) is used in rendering, or used as input to blood vessel segmentation processing instead, which is described here in regard to several embodiments.

The system in FIG. 4 is configured to execute a series of steps shown as an outline in FIG. 11. FIG. 12 shows a flowchart according to one embodiment in more detail.

FIGS. 11 and 12 are flowcharts each showing a process of classifying tissues from a histogram and executing even another classification of calcium. However, in another embodiment, all tissues are classified from the histogram, and another classification of calcium is not executed.

In step 210 of FIG. 11, the reception circuitry 44 receives the non-contrast image 100 and the contrast image 101. In the embodiment, the non-contrast image 100 is acquired from a calcium score scan of the coronary artery of a patient, and the contrast image 101 is a contrast image acquired from a CCTA scan of the coronary artery of the patient.

Note that an arbitrary non-contrast image and contrast image may be used. Image data received by the reception circuitry 44 may be image data from a DCE scan such as image data representing a liver blood vessel in a liver DCE scan. The reception circuitry 44 transfers the non-contrast image 100 and the contrast image 101 to the processing circuitry 45.

In step 220, the processing circuitry 45 aligns the non-contrast image 100 to the contrast image 101. In some cases, an arbitrary proper alignment method is used. In the embodiment, the processing circuitry 45 executes a combination of a non-rigid registration step and a rigid registration step. The alignment method used in the embodiment is described in M. Razeto, B. Mohr, K. Arakita, J.D. Schuijf, A. Fuchs, J.T. Kuhl, M.Y. Chen, and K.F. Kofoed, "Accurate, fully-automated registration of coronary arteries for volumetric CT digital subtraction angiography", Proc. SPIE9034, 90343F-90343F-7 (2014).

In step 230, the processing circuitry 45 classifies a calcium area and a blooming area in the non-contrast image.

Pixels in the non-contrast image are classified into two classes. The first class represents either of the calcium area and blooming area. The second class of pixels does not represent either of the calcium area and blooming area. Note that pixels in the non-contrast image may be separated into three classes, that is, a class representing the calcium area, a class representing the blooming area, and a class representing neither the calcium area nor the blooming area.

In step 240, the processing circuitry 45 generates a joint histogram as described with reference to FIG. 6.

In step 250, the processing circuitry 45 executes automatic classification of pixels to the lumen area, vessel wall area, blooming area, and misalignment area by using the joint histogram. An arbitrary proper classification method in the joint histogram is used.

In step 260, the processing circuitry 45 segments a blood vessel by using the classification of the calcium area and blooming area from step 230, and the classification of the lumen area, vessel wall area, blooming area, and misalignment area from step 250.

Steps 230 to 260 include the same or similar classification processing and segmentation processing as or to processes described in U.S. Patent Application Publication No. 14/099092.

FIG. 12 is a more detailed flowchart showing the steps of processing by the image processing apparatus according to the embodiment.

In step 310, the reception circuitry 44 receives a non-contrast image and a contrast image. In step 320, the processing circuitry 45 serves as the alignment function 48 to align the non-contrast image and the contrast image. The processing circuitry 45 generates the non-contrast image 103 aligned using alignment.

In step 322, the processing circuitry 45 roughly segments a blood vessel in the contrast image 101 by using an efficient active contour algorithm. Rough segmentation is used to remove pixels representing a material other than a target, such as pixels representing air or a bone. By rough segmentation, a blood vessel wall can be discriminated from another soft tissue.

Note that an arbitrary segmentation method may be used to execute rough segmentation. The rough segmentation technique includes a blood vessel tracking method, which is an arbitrary proper method of blood vessel tracking. Further, rough segmentation may not be executed.

By rough segmentation, pixels in the contrast image that form part of the blood vessel are estimated. This estimation is sometimes inaccurate, and the pixels include any soft tissue around the blood vessel. The processing circuitry 45 outputs pixels in the contrast image including part of rough segmentation of the blood vessel.

In step 323, the processing circuitry 45 identifies pixels in the aligned non-contrast image 103 that correspond to pixels in the contrast image 101 determined by rough segmentation.

The processing circuitry 45 applies a morphological dilation (double dilation in the embodiment) to rough segmentation. The processing circuitry 45 identifies the pixels of the aligned non-contrast image 103. After the dilation, the pixels in the non-contrast image 100 are used to execute classification of a calcium area and blooming area.

Note that a different morphological dilation may be used, or no morphological dilation may be used.

In step 330, the processing circuitry 45 executes classification of a calcium area and blooming area in the non-contrast image 100. The classification in step 330 includes steps 332 to 336 in FIG. 12. In the embodiment, the classification method is an unsupervised classification method, but is not limited to this. An arbitrary proper classification method may be used with or without a supervisor.

In step 332, the processing circuitry 45 uses pixels determined by the morphological dilation in step 323. The processing circuitry 45 determines a pixel threshold used to divide pixels in the calcium area and the blooming area from pixels representing neither the calcium area nor the blooming area. In the embodiment, the threshold is found out by determining either of different candidate thresholds by using a Bayesian information criteria (BIC) technique. Note that information criteria of another form may be used, or another arbitrary proper method of determining a threshold may be used.

First, the processing circuitry 45 determines candidate thresholds. For example, the pixel maximum value and minimum value of the pixel values of pixels determined by the morphological dilation in step 323 are identified to determine a plurality of different candidate thresholds. Each candidate threshold is set to be a value larger than the minimum pixel value and smaller than the maximum pixel value.

Then, the processing circuitry 45 defines a finite set of models. Each model divides pixels from step 323 by using different thresholds among the candidate thresholds. An appropriate distribution such as a Gaussian distribution is adapted to data in each of the two divides. For each model, the processing circuitry 45 calculates the BIC for the two divides or subgroups as the function of the threshold. As a result, the processing circuitry 45 acquires a BIC measurement value for each finite set of models. The processing circuitry 45 generates the graph of the BIC measurement value with respect to the threshold. As a model that optimally divides the pixels of the calcium area and blooming area from pixels of another threshold, the processing circuitry 45 selects a model corresponding to the maximum value of the BIC measurement value graph. As a threshold used in a further step of classification of the calcium area and blooming area, the processing circuitry 45 sets a candidate threshold corresponding to the maximum value of the BIC measurement value graph.

In step 333, the processing circuitry 45 applies the threshold from step 332 to the non-contrast image, and identifies pixels among the pixels from step 323 that are higher than the threshold. The processing circuitry 45 can flag the identified pixels as pixels of the calcium area or blooming area or in some cases, mark them. In the embodiment, the processing circuitry 45 defines a set of pixels identified as the calcium area or blooming area.

In step 334, the processing circuitry 45 identifies each area in the contrast image by using a connected component analysis, and each area is at least one area of individual calcium deposition and blooming. Each area includes a plurality of connected pixels. Connected component analysis processing is applied to pixels identified as a typical calcium area or a typical blooming area. In the connected component analysis, respective clusters between connected pixels are identified as separate areas. To identify the area of connected pixels, arbitrary proper connected component analysis processing is sometimes used.

By the connected component analysis, an identified set of individual calcium areas or blooming areas is obtained in the pixels from the non-contrast image identified in step 323.

In step 335, the processing circuitry 45 adapts the pixel distribution of each calcium area to the Gaussian type by using at least either of the k-means and expectation maximization (EM). The k-means algorithm is described by J.B. McQueen in "Some methods for classification and analysis of multivariate observations", (Proceedings of the Fifth Symposium on Math, Statistics, and Probability, pages 281 - 297, University of California Press, 1967), and by J. Marroquin and F. Girosi in "Some extension of the k-means algorithm for image segmentation and pattern recognition", (AI Memo 1390, Massachusetts Institute of Technology, Cambridge, MA, 1993). The expectation maximization (EM) algorithm is described by T.K. Moon in "The expectation-maximization algorithm", (Signal Processing Magazine, IEEE, vol. 13, pages 47 - 60, November 1996).

An arbitrary proper adaptive function is used, but the function is not limited to this. Each pixel distribution is adapted not to the Gaussian type but to an alternative distribution.

In step 336, the processing circuitry 45 defines, based on an adaptive distribution for each pixel in the non-contrast image, a likelihood at which the pixel represents a calcium area or a blooming area. After that, step 330 (classification of the calcium area and blooming area in the aligned non-contrast image 103) ends.

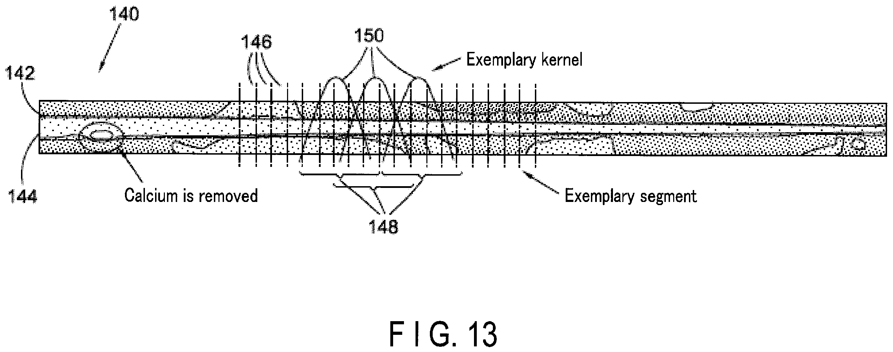

Step 337 is executed before, after, or at the same time as step 330. In step 337, the processing circuitry 45 uses the pixels determined by the morphological dilation in step 323 of FIG. 12. The processing circuitry 45 employs pixels determined by the morphological dilation in step 323, which is a dilation of the rough segmentation in step 322. The processing circuitry 45 divides the blood vessel represented by the pixels into a plurality of sections along the length of the blood vessel. FIG. 13 shows a schematic cross section passing part of an imaged blood vessel 140 including a blood vessel wall 142 and a blood vessel lumen 144. The blood vessel is divided into a plurality of adjacent sections 146 indicated by broken lines.

In step 338, the processing circuitry 45 classifies a plurality of sections adjacent to each other into blood vessel areas. For example, in FIG. 13, five sections slightly overlap each other. In step 339, the processing circuitry 45 applies a Gaussian kernel 150 to each blood vessel area, and generates a set of weighted pixels.

In step 340, the processing circuitry 45 generates a pixel joint histogram based on the non-contrast image and the contrast image for each blood vessel area. The joint histogram is identical to the joint histogram in FIG. 6, so a description of generation of the joint histogram will not be repeated.

In step 350, the processing circuitry 45 determines the mean, variance, and weight of each of the lumen area, vessel wall area, blooming area, and misalignment area serving as four distributions. The distributions of the lumen area, vessel wall area, blooming area, and misalignment area are drawn as described above with reference to FIG. 6. Each tissue type (or blooming or misalignment) is assumed to have a two-dimensional Gaussian distribution in the joint histogram. In the embodiment, the k-means algorithm is used in cooperation with the expectation maximization algorithm in order to determine the means, variances, and weights of all the four Gaussian distributions. Accordingly, the positions and ranges of corresponding clusters of respective points in the joint histogram are determined. Note that an arbitrary proper technique may be used to determine the mean, variance, and weight of each distribution. The distribution is not the Gaussian type in some cases. More or less than four distributions are determined, and each distribution represents at least one of various tissue types and artifacts.

In the embodiment, the processing circuitry 45 determines means, variances, and weights for the Gaussian distributions of a blood vessel lumen and blood vessel wall in a predetermined blood vessel area by using a joint histogram for the blood vessel area. The classification of the blood vessel lumen area and blood vessel wall area is independently executed in each blood vessel area. However, in the case of a misalignment area and blooming area, there is sometimes statistical data insufficient for adapting a Gaussian distribution in the specific blood vessel area. Hence, distributions for the misalignment area and the blooming area are adapted to a joint histogram including pixels for the entire blood vessel tree. In the case of a blood vessel nucleus area, statistical data is sometimes sufficient for adaptation to the blood vessel lumen and the blood vessel wall, but insufficient for adaptation to misalignment or blooming in the blood vessel nucleus area. In such a case, blooming and misalignment can be broadly adapted using the entire blood vessel tree in the embodiment.

Note that the blooming area or the misalignment area is identified using a fixed area of the histogram that is an offset from the distribution of at least one of the classified lumen area and vessel wall area. For example, a distribution for a blooming area in the joint histogram of a predetermined blood vessel nucleus area is sometimes determined by positioning a distribution of a fixed size at a predetermined distance from the center of the lumen distribution. The lumen distribution is determined by adapting it to a joint histogram for the blood vessel nucleus area.

In step 352, the processing circuitry 45 assigns a likelihood (or probability) to each pixel in regard to each of the lumen area, vessel wall area, blooming area, and misalignment area based on the likelihood of each of the calculated blood vessel areas.

In the embodiment, the processing circuitry 45 defines, for each pixel in accordance with the likelihood in step 350, a likelihood at which the pixel represents the lumen area, a likelihood at which the pixel represents the vessel wall area, a likelihood at which the pixel represents the blooming area, and a likelihood at which the pixel represents the misalignment area. Hence, the processing circuitry 45 serves as the segmentation function 52 to set a likelihood at which a predetermined pixel having a pixel I in the non-contrast image and a pixel J in the contrast image is a pixel of a predetermined tissue type (or blooming or misalignment).

In step 360, the processing circuitry 45 uses the likelihood or probability acquired in step 336 for the calcium area or the blooming area, and the classification acquired in step 352 for the lumen area, the vessel wall area, the blooming area, and the misalignment area.

When the lumen area, the calcium area, and the blooming area are discriminated, a special treatment (e.g., weighting or modeling) of the blooming class becomes possible. In some cases, several additional diagnoses are made from blooming. For example, blooming data is sometimes used in a physical model, or a model learnt from data using a machine learning technique. In some cases, such a model helps separation between calcium deposition and a lumen, leads to more accurate segmentation or more accurate calculation estimation, and leads to more accurate estimation of the degree of stenosis.

FIG. 10 shows a non-contrast image in which a calcium area and a blooming area exist. When a lumen area and a blooming area are separated using a joint histogram, blooming (e.g., an area 90 in FIG. 10) outside a blood vessel can be discriminated from a blooming area (e.g., an area 92 in FIG. 10) extending into the lumen in some cases.

When a likelihood or a probability is assigned to a pixel, the likelihood or the probability is used to segment pixels of each specific type from a data set including pixel data. In the embodiment, a data set in which pixels of each type are segmented is a composited data set in which image data from both the aligned non-contrast image 103 and the contrast image 101 are assembled.

In the embodiment, the data set in which pixels are segmented includes all pixels from the aligned non-contrast image 103 and the contrast image 101. Segmentation uses data from all data sets and is not limited to rough segmentation. In another embodiment, data in which pixels are segmented includes only pixels roughly segmented in step 222 of FIG. 12, or other arbitrary proper pixels.

Segmentation of a lumen is executed using a level setting method. The level setting technique for segmentation of a lumen is described in B. Mohr, S. Masood, C. Plakas, "Accurate lumen segmentation and stenosis detection and quantification in coronary CTA", Proc. of MICCAI Workshop "3D Cardiovascular Imaging: a MICCAI Segmentation Challenge", 2012. All classifications (a lumen area, vessel wall area, misalignment area, and blooming area from a joint histogram, and a calcium area and blooming area from a non-contrast image) are used to weight a velocity function for driving level setting. The velocity function uses all determined likelihoods. The velocity function is therefore determined in accordance with the acquired classifications.

Level setting is solved to implement segmentation. Level setting processing assigns each pixel to a tissue type (or misalignment or blooming). The processing circuitry 45 uses the segmentation function 52 to extract pixels assigned to a blood vessel lumen.

Based on the classification of a misalignment area, the processing circuitry 45 determines an estimation reliability level for segmentation. It can be said that the estimation reliability level is low when many pixels are classified into the misalignment class, and high when only a few pixels are classified into the misalignment class.

By the classification of misalignment, the estimation reliability sometimes becomes applicable to segmentation. The identification of misalignment sometimes prevents abnormal segmentation.

In an alternative embodiment, an arbitrary proper segmentation method such as an active contour method is sometimes used in step 60.

The result of segmentation is displayed to the user. The result of segmentation is supplied to an arbitrary proper further process.

In the embodiment, steps 322 to 360 of the processing in FIG. 12 describe segmentation of a single blood vessel. Steps 322 to 360 of the processing in FIG. 12 may be repeated for another blood vessel in image data.

Improvement of the accuracy and robustness of segmentation sometimes increases the clinical reliability. Improvement of the accuracy and robustness of automatic segmentation sometimes enables a robust automatic differential technique such as detection and quantization of a stenosis.

When a two-dimensional distribution (e.g., a joint histogram) is used, much more classes than those identified using a one-dimensional distribution are identified. Since two dimensions are used in the embodiment, a blooming area is separated from a lumen area in the joint histogram. When a lumen area, a vessel wall area, a misalignment area, and a blooming area are identified using the joint histogram, the lumen area and the vessel wall area can be sometimes separated more satisfactorily than in a case in which they are separated using a one-dimensional distribution (without identifying the misalignment area and the blooming area).

There is provided a method of segmenting a blood vessel by using both a non-contrast image and a contrast image. This method includes constructing a two-dimensional joint histogram from an aligned non-contrast image and a contrast image, and classifying a lumen area, a vessel wall area, a blooming area, and a misalignment area by using the two-dimensional joint histogram.

Also, rough segmentation of a blood vessel is executed. The classification of tissues is restricted to rough segmentation of a blood vessel. In the rough segmentation, the blood vessel is divided into kernel-based (overlapping) areas. The classification of the lumen area and vessel wall area is independently executed in each area by adapting a distribution using an unsupervised learning technique.

The distribution is sometimes assumed to be the Gaussian type. The unsupervised learning technique is at least either of the k-means and expectation maximization.

Segmentation is executed using level setting having a velocity function of equilibrating a tissue classification likelihood distribution. In some cases, a specific treatment (e.g., additional modeling or weighting) is applied to the blooming class. The classification of misalignment contributes to the estimation reliability of segmentation. When blooming contributes to a lumen signal and others, it is individually classified. Blooming, misalignment, and the like are identified (assumed) using a fixed area offset from a classified lumen/wall distribution.

The embodiment has been described above in regard to rendering or segmentation of CT data, but is not limited to this. The embodiment is used to render or segment medical image data of an arbitrary proper type such as X-ray data, MRI data, PET data, or SPECT data. Medical image data includes veterinary image data. Although the embodiment has been described in regard to data from a non-contrast image and a subtraction image, an arbitrary image type in which various features are classified may be used. Medical image data is directed to an arbitrary portion of a body.

The above embodiment assumes that a joint histogram is a two-dimensional distribution defined by the pixel value of the first medical image and the pixel value of the second medical image. However, the embodiment is not limited to this. That is, a joint histogram according to the embodiment may have three or more dimensions.

The apparatus in FIG. 4 is configured to execute both the visualization method in FIG. 5 and the segmentation method in FIG. 12. In another embodiment, the apparatus is sometimes configured to execute the method in FIG. 12 without executing the method in FIG. 5 (e.g., the rendering function 50 is sometimes excluded from the processing circuitry 45).

(Overview)

As described above, the image processing apparatus 30 according to the embodiment includes at least the memory 40 and the processing circuitry 45. The memory 40 stores the first and second medical images regarding the same imaging region imaged at different times. The processing circuitry 45 generates numerical data representing the frequency of a combination of the pixel value of the first medical image and the pixel value of the second medical image at the same coordinates. Then, the processing circuitry 45 divides the second medical image into a plurality of image areas by using the generated numerical data.

With the above-described arrangement, for example, a blood vessel lumen area, a blood vessel wall area, a calcium deposition area, a blooming area, a stent area, and the like can be automatically and accurately segmented using numerical data representing the frequency of a combination of the pixel value of the first medical image and the pixel value of the second medical image at the same coordinates.

Hence, an image processing apparatus capable of improving the segmentation precision, and an image processing method and image processing program used in the image processing apparatus can be provided.

Although specific units have been described in this specification, one or a plurality of functions out of these units are provided by a single unit, a processing resource, or another building element in an alternative embodiment, or functions provided by a single unit are provided by two or more combined units. Reference to a single unit includes a plurality of building elements that provide the function of this unit, regardless of whether these building elements are apart from each other. Reference to a plurality of units includes a single building element that provides the functions of these units.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the invention. The accompanying claims are intended to cover such forms or modifications as would fall within the scope of the invention.

**Claims**

1.  A medical image processing apparatus comprising:

    a storage unit (40) configured to store a non-contrast medical image and contrast medical image regarding the same imaging region imaged at different times;
    a generation unit (50) configured to generate numerical data representing a frequency of a combination of a pixel value of the non-contrast medical image and a pixel value of the contrast medical image at the same coordinates; and
    a segmentation unit (52) configured to divide the contrast medical image and/or the non-contrast medical image into a plurality of image areas by using the generated numerical data;
    wherein the plurality of image areas comprises a misalignment area, the misalignment area comprising pixels for which a pixel value of each pixel in the contrast medical image is smaller than a pixel value of that pixel in the non-contrast medical image.

2.  The apparatus of claim 1, further comprising an alignment unit (48) configured to align the non-contrast medical image to the contrast medical image.

3.  The apparatus of claim 2, **characterized in that** the generation unit (50) generates a joint histogram visually expressing, as the numerical data, the frequency of the combination of the pixel value of the aligned non-contrast medical image and the pixel value of the contrast medical image in a two-dimensional orthogonal coordinate system using the pixel value of the aligned non-contrast medical image and the pixel value of the contrast medical image as two axes, and
    the segmentation unit (52) divides the contrast medical image and/or the non-contrast medical image into a plurality of image areas by using the joint histogram.

4.  The apparatus of claim 1, **characterized in that** the segmentation unit (52) divides the contrast medical image into an artifact area and a non-artifact area.

5.  The apparatus of claim 4, **characterized in that** the segmentation unit (52) divides the artifact area and the non-artifact area based on likelihoods corresponding to respective areas.

6.  The apparatus of claim 4, **characterized in that** the segmentation unit (52) divides the contrast medical image into a misalignment area and a blooming area as the artifact area, and divides the contrast medical image into a contrast area and a non-contrast area as the non-artifact area.

7.  The apparatus of claim 6, **characterized in that** the contrast area is a lumen area, and the non-contrast area is a vessel wall area.

8.  The apparatus of claim 1, **characterized in that** the non-contrast medical image is a pre-contrast image, and the contrast medical image is a post-contrast image.

9.  The apparatus of claim 1, **characterized in that** one of the contrast medical image and non-contrast medical image is a preoperative image, and the other of the contrast medical image and non-contrast medical image is a postoperative image.

10. The apparatus of claim 1, further comprising an image generation unit (46) configured to generate, based on the contrast medical image and/or non-contrast medical image, a rendering image in which the plurality of divided image areas can be visually identified.

11. The apparatus of claim 10, **characterized in that** the image generation unit (46) assigns at least one of a color and an optical characteristic to at least one area of the plurality of divided image areas.

12. The apparatus of claim 11, **characterized in that** the image generation unit (46) determines, in accordance with positions and ranges of the plurality of divided areas, a position and range in which at least one of the color and the optical characteristic is assigned.

13. The apparatus of claim 12, **characterized in that** the image generation unit (46) determines, by using a model for assigning at least one of the color and the optical characteristic, the position and range in which at least one of the color and the optical characteristic is assigned to the plurality of divided image areas.

14. The apparatus of claim 12, **characterized in that** the image generation unit (46) determines, by using a table regarding at least one of the color and the optical characteristic set for a likelihood corresponding to each area, the position and range in which at least one of the color and the optical characteristic is assigned to the plurality of divided image areas.

15. A medical image processing method comprising:

generating numerical data representing a frequency of a combination of a pixel value of a non-contrast medical image and a pixel value of a contrast medical image, the non-contrast medical image and the contrast medical image regarding the same imaging region imaged at different times; and
dividing the contrast medical image and/or the non-contrast medical image into a plurality of image areas by using the generated numerical data;
wherein the plurality of image areas comprises a misalignment area, the misalignment area comprising pixels for which a pixel value of each pixel in the contrast medical image is smaller than a pixel value of that pixel in the non-contrast medical image.

**Patentansprüche**

1. Medizinische Bildverarbeitungsvorrichtung, umfassend:

eine Speichereinheit (40), die konfiguriert ist, um ein medizinisches Nicht-Kontrastbild und ein medizinisches Kontrastbild bezüglich des gleichen Bildgebungsbereichs zu speichern, der zu verschiedenen Zeiten abgebildet wird;
eine Erzeugungseinheit (50), die konfiguriert ist, um numerische Daten zu erzeugen, die eine Frequenz einer Kombination eines Pixelwerts des medizinischen Nicht-Kontrastbildes und eines Pixelwerts des medizinischen Kontrastbildes an den gleichen Koordinaten darstellen; und
eine Segmentierungseinheit (52), die konfiguriert ist, um das medizinische Kontrastbild und/oder das medizinische Nicht-Kontrastbild unter Verwendung der erzeugten numerischen Daten in eine Vielzahl von Bildbereichen aufzuteilen;
wobei die Vielzahl von Bildbereichen einen Fehlausrichtungsbereich umfasst, wobei der Fehlausrichtungsbereich Pixel umfasst, für welche ein Pixelwert jedes Pixels im medizinischen Kontrastbild kleiner ist als ein Pixelwert desselben Pixels im medizinischen Nicht-Kontrastbild.

2. Vorrichtung nach Anspruch 1, ferner umfassend eine Ausrichtungseinheit (48), die konfiguriert ist, um das medizinische Nicht-Kontrastbild auf das medizinische Kontrastbild auszurichten.

3. Vorrichtung nach Anspruch 2, **dadurch gekennzeichnet, dass** die Erzeugungseinheit (50) ein gemeinsames Histogramm erzeugt, das visuell als numerische Daten die Frequenz der Kombination des Pixelwerts des ausgerichteten medizinischen Nicht-Kontrastbildes und des Pixelwerts des zweiten medizinischen Kontrastbildes in einem zweidimensionalen orthogonalen Koordinatensystem unter Verwendung des Pixelwerts des ausgerichteten medizinischen Nicht-Kontrastbildes und des Pixelwerts des medizinischen Kontrastbildes als zwei Achsen ausdrückt, und
die Segmentierungseinheit (52) das medizinische Kontrastbild und/oder das medizinische Nicht-Kontrastbild in eine Vielzahl von Bildbereichen unter Verwendung des gemeinsamen Histogramms teilt.

4. Vorrichtung nach Anspruch 1, **dadurch gekennzeichnet, dass** die Segmentierungseinheit (52) das medizinische Kontrastbild in einen Artefaktbereich und einen Nicht-Artefaktbereich unterteilt.

5. Vorrichtung nach Anspruch 4, **dadurch gekennzeichnet, dass** die Segmentierungseinheit (52) den Artefaktbereich und den Nicht-Artefaktbereich basierend auf den jeweiligen Bereichen entsprechenden Wahrscheinlichkeiten unterteilt.

**6.** Vorrichtung nach Anspruch 4, **dadurch gekennzeichnet, dass** die Segmentierungseinheit (52) das medizinische Kontrastbild in einen Fehlausrichtungsbereich und einen überstrahlenden Bereich als den Artefaktbereich unterteilt und das medizinische Kontrastbild in einen Kontrastbereich und einen Nichtkontrastbereich unterteilt, der der Bereich ohne Artefakte ist.

**7.** Vorrichtung nach Anspruch 6, **dadurch gekennzeichnet, dass** der Kontrastbereich ein Lumenbereich ist und der Nichtkontrastbereich ein Gefäßwandbereich ist.

**8.** Vorrichtung nach Anspruch 1, **dadurch gekennzeichnet, dass** das medizinische Nicht-Kontrastbild ein Bild vor dem Kontrast ist und das medizinische Kontrastbild ein Bild nach dem Kontrast ist.

**9.** Vorrichtung nach Anspruch 1, **dadurch gekennzeichnet, dass** ein vom medizinischen Kontrastbild und vom medizinischen Nicht-Kontrastbild ein präoperatives Bild ist und das andere vom medizinischen Kontrastbild und vom medizinischen Nicht-Kontrastbild ein postoperatives Bild ist.

**10.** Vorrichtung nach Anspruch 1, ferner umfassend eine Bilderzeugungseinheit (46), die so konfiguriert ist, dass sie auf der Grundlage des medizinischen Kontrastbildes und/oder des medizinischen Nicht-Kontrastbildes ein Renderingbild erzeugt, in dem die Vielzahl von unterteilten Bildbereichen visuell identifiziert werden kann.

**11.** Vorrichtung nach Anspruch 10, **dadurch gekennzeichnet, dass** die Bilderzeugungseinheit (46) mindestens eine von einer Farbe und einer optischen Eigenschaft zumindest einem Bereich aus der Vielzahl der unterteilten Bildbereiche zuordnet.

**12.** Vorrichtung nach Anspruch 11, **dadurch gekennzeichnet, dass** die Bilderzeugungseinheit (46) in Übereinstimmung mit Positionen und Bereichen der Vielzahl von unterteilten Bereichen eine Position und einen Bereich bestimmt, in dem mindestens eine der Farbe und der optischen Eigenschaft zugewiesen ist.

**13.** Vorrichtung nach Anspruch 12, **dadurch gekennzeichnet, dass** die Bilderzeugungseinheit (46), unter Verwendung eines Modells zum Zuordnen mindestens einer von der Farbe und der optischen Eigenschaft, die Position und den Bereich bestimmt, in dem mindestens eine von der Farbe und der optischen Eigenschaft der Vielzahl von unterteilten Bildbereichen zugewiesen ist.

**14.** Vorrichtung nach Anspruch 12, **dadurch gekennzeichnet, dass** die Bilderzeugungseinheit (46) unter Verwendung einer Tabelle bezüglich mindestens einer der Farbe und der optischen Eigenschaft, die für eine jedem Bereich entsprechende Wahrscheinlichkeit eingestellt ist, die Position und den Bereich bestimmt, in denen mindestens eine der Farbe und der optischen Eigenschaft der Vielzahl von Bildbereichen zugeordnet wird.

**15.** Medizinisches Bildverarbeitungsverfahren, umfassend:

Erzeugen von numerischen Daten, die eine Frequenz einer Kombination eines Pixelwerts eines medizinischen Nicht-Kontrastbildes und eines Pixelwerts eines medizinischen Kontrastbildes darstellen, wobei das medizinische Nicht-Kontrastbild und das medizinische Kontrastbild den zu unterschiedlichen Zeiten abgebildeten gleichen Bildgebungsbereich darstellen; und
Unterteilen des medizinischen Kontrastbildes und/oder des medizinischen Nicht-Kontrastbildes in eine Vielzahl von Bildbereichen unter Verwendung der erzeugten numerischen Daten;
wobei die Vielzahl von Bildbereichen einen Fehlausrichtungsbereich umfassen, wobei der Fehlausrichtungsbereich Pixel umfasst, für welche ein Pixelwert jedes Pixels im medizinischen Kontrastbild kleiner als der Pixelwert desselben Pixels im medizinischen Nicht-Kontrastbild ist.

**Revendications**

**1.** Appareil de traitement d'image médicale, comprenant :

une unité de stockage (40) configurée afin de stocker une image médicale sans contraste et une image médicale avec contraste concernant la même région d'imagerie imagée à différents moments ;
une unité de génération (50) configurée afin de générer des données numériques représentant une fréquence d'une combinaison d'une valeur de pixel de l'image médicale sans contraste et d'une valeur de pixel de l'image médicale avec contraste aux mêmes coordonnées ; et

une unité de segmentation (52) configurée afin de diviser l'image médicale de contraste et/ou l'image médicale sans contraste en une pluralité de zones d'image en utilisant les données numériques générées ;

dans lequel la pluralité de zones d'image comprend une zone de désalignement, la zone de désalignement comprenant des pixels pour lesquels une valeur de pixel de chaque pixel dans l'image médicale de contraste est inférieure à une valeur de pixel de ce pixel dans l'image médicale sans contraste.

2. Appareil selon la revendication 1, comprenant en outre une unité d'alignement (48) configurée afin d'aligner l'image médicale sans contraste à l'image médicale avec contraste.

3. Appareil selon la revendication 2, **caractérisé en ce que** l'unité de génération (50) génère un histogramme joint exprimant visuellement, sous la forme de données numériques, la fréquence de la combinaison de la valeur de pixel de l'image médicale sans contraste alignée et la valeur de pixel de l'image médicale avec contraste dans un système de coordonnées perpendiculaire en deux dimensions en utilisant la valeur de pixel de l'image médicale sans contraste alignée et la valeur de pixel de l'image médicale avec contraste sous la forme de deux axes, et l'unité de segmentation (52) divise l'image médicale avec contraste et/ou l'image médicale sans contraste en une pluralité de zones d'image en utilisant l'histogramme joint.

4. Appareil selon la revendication 1, **caractérisé en ce que** l'unité de segmentation (52) divise l'image de contraste médical en une zone d'artéfact et une zone sans artéfact.

5. Appareil selon la revendication 4, **caractérisé en ce que** l'unité de segmentation (52) divise la zone d'artéfact et la zone sans artéfact sur la base de probabilités correspondant aux zones respectives.

6. Appareil selon la revendication 4, **caractérisé en ce que** l'unité de segmentation (52) divise l'image médicale de contraste en une zone de désalignement et une zone de d'éblouissement comme zone d'artéfact, et divise l'image médicale de contraste en une zone de contraste et une zone sans contraste comme zone sans artéfact.

7. Appareil selon la revendication 6, **caractérisé en ce que** la zone de contraste est une zone de lumière, et la zone sans contraste est une zone de paroi de vaisseau.

8. Appareil selon la revendication 1, **caractérisé en ce que** l'image médicale sans contraste est une image de pré-contraste, et l'image médicale de contraste est une image post-contraste.

9. Appareil selon la revendication 1, **caractérisé en ce que** l'une de l'image médicale de contraste et de l'image médicale sans contraste est une image préopératoire, et l'autre de l'image médicale de contraste et de l'image médicale sans contraste est une image post-opératoire.

10. Appareil selon la revendication 1, comprenant en outre une unité de génération d'image (46) configurée afin de générer, sur la base d'une image médicale de contraste et/ou d'une image médicale sans contraste, une image de rendu dans laquelle la pluralité de zones d'image divisées peut être visuellement identifiée.

11. Appareil selon la revendication 10, **caractérisé en ce que** l'unité de génération d'image (46) attribue au moins une d'une couleur et d'une caractéristique optique à au moins une zone de la pluralité de zones d'image divisées.

12. Appareil selon la revendication 11, **caractérisé en ce que** l'unité de génération d'image (46) détermine, conformément à des positions et gammes de la pluralité de zones divisées, une position et une gamme dans lesquelles au moins une de la couleur et de la caractéristique optique est attribuée.

13. Appareil selon la revendication 12, **caractérisé en ce que** l'unité de génération d'image (46) détermine, en utilisant un modèle permettant d'attribuer au moins une de la couleur et de la caractéristique optique, la position et la gamme dans lesquelles au moins une de la couleur et de la caractéristique optique est attribuée à la pluralité de zones d'image divisées.

14. Appareil selon la revendication 12, **caractérisé en ce que** l'unité de génération d'image (46) détermine, en utilisant un tableau concernant au moins une de la couleur et de la caractéristique optique établie pour une probabilité correspondant à chaque zone, la position et la gamme dans lesquelles au moins une de la couleur et de la caractéristique optique est attribuée à la pluralité de zones d'image divisées.

**15.** Procédé de traitement d'image médicale comprenant :

la génération de données numériques représentant une fréquence d'une combinaison d'une valeur de pixel d'une image médicale sans contraste et d'une valeur de pixel d'une image médicale avec contraste, l'image médicale sans contraste et l'image médicale avec contraste concernant la même zone d'imagerie imagée à différents moments ; et

la division de l'image médicale de contraste et/ou de l'image médicale sans contraste en une pluralité de zones d'image en utilisant les données numériques générées ;

dans lequel la pluralité de zones d'image comprend une zone de désalignement, la zone de désalignement comprenant des pixels pour lesquels une valeur de pixel de chaque pixel dans l'image médicale avec contraste est inférieure à une valeur de pixel de ce pixel dans l'image médicale sans contraste.

F I G. 1

EP 3 035 287 B1

17

# F I G. 2

F I G. 3A

F I G. 3B

CT scanner — 34

Image processing apparatus ⌐ -- 30

Computing apparatus

CPU

32

Reception circuitry — 44

42

45

Processing circuitry

Generation function — 46

Alignment function — 48

Rendering function — 50

Segmentation function — 52

Memory

40

Display

36

Input interface circuitry

38

F I G. 4

F I G. 5

HU value of post-contrast image

HU value of aligned
pre-contrast image

0

70

74

72

76

FIG. 6

F I G. 7A

F I G. 7B

FIG. 8

# F I G. 9

92    90

F I G. 10

210 — Receive pre-contrast image and post-contrast image

Align pre-contrast image and post-contrast image — 220

230 — Classify calcium and blooming

Construct joint histogram — 240

Classify lumen, wall, blooming, and misalignment — 250

Segment blood vessel — 260

F I G. 11

31

310 — Receive pre-contrast image and post-contrast image → Align pre-contrast image and post-contrast image — 320

Roughly segment blood vessel — 322

Perform morphological dilation of rough segmentation — 323

330 {

332 — Identify threshold of calcium/blooming using BIC

333 — Identify voxel larger than threshold in dilated rough segmentation

334 — Perform connected component analysis

335 — Adapt normal distribution to luminance histogram

336 — Assign likelihood of calcium /blooming to each voxel

Divide roughly segmented blood vessel into segments — 337

Group segments for each area — 338

Apply kernel to each area and weight voxel — 339

Construct joint histogram — 340

Classify lumen, wall, blooming, and misalignment — 350

Assign tissue type likelihood to each voxel — 352

Segment blood vessel — 360

F I G. 12

32

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090022375 A
- EP 2120208 A
- US 099092 A

### Non-patent literature cited in the description

- **M. RAZETO ; B. MOHR ; K. ARAKITA ; J.D. SCHUIJF ; A. FUCHS ; J.T. KUHL ; M.Y. CHEN ; K.F. KOFOED.** Accurate, fully-automated registration of coronary arteries for volumetric CT digital subtraction angiography. *Proc. SPIE9034, 90343F-90343F-7,* 2014
- Some methods for classification and analysis of multivariate observations. **J.B. MCQUEEN.** Proceedings of the Fifth Symposium on Math, Statistics, and Probability. University of California Press, 1967, 281-297
- Some extension of the k-means algorithm for image segmentation and pattern recognition. **J. MARROQUIN ; F. GIROSI.** AI Memo 1390. Institute of Technology, 1993
- The expectation-maximization algorithm. **T.K. MOON.** Signal Processing Magazine. IEEE, November 1996, vol. 13, 47-60
- **B. MOHR ; S. MASOOD ; C. PLAKAS.** Accurate lumen segmentation and stenosis detection and quantification in coronary CTA. *Proc. of MICCAI Workshop "3D Cardiovascular Imaging: a MICCAI Segmentation Challenge,* 2012